# EUROPEAN PATENT APPLICATION

(11) **EP 4 776 571 A1**
(43) Date of publication of application: **15.07.2026**
(21) Application number: 25817728.6
(22) Date of filing: 06.01.2025
(51) Int. Cl.: H04L 9/40

(54) **HOME GATEWAY SERVICE IDENTIFICATION METHOD, APPARATUS AND SYSTEM**

(30) Priority: 11.11.2024 CN 202411601200
(71) Applicant: Fiberhome Telecommunication Technologies Co., Ltd, Wuhan, Hubei (CN)
(72) Inventor: JIANG, Chao, Wuhan, Hubei 430000 (CN); XIONG, Weicheng, Wuhan, Hubei 430000 (CN); LI, Ming, Wuhan, Hubei 430000 (CN); LV, Zhihua, Wuhan, Hubei 430000 (CN); YANG, Linfeng, Wuhan, Hubei 430000 (CN)
(74) Representative: Lohmanns Lohmanns & Partner mbB
(86) International application number: PCT/CN2025/070647
(87) International publication number: WO 2026/097692

(57) **Abstract**

Disclosed is a home gateway service identification method, device and system, and the method comprises: judging an access destination address of a terminal connected with the home gateway by a home gateway so as to identify the type of a service initiated by the terminal; if it is identified that the service initiated by the terminal belongs to IPTV services, routing the service to an IPTV network by the home gateway; and if it is identified that the service initiated by the terminal belongs to Internet services, forwarding the service to an Internet by the home gateway, and binding all remaining interfaces except the interfaces used by the terminal carrying the IPTV services with a public network. According to the present application, two or more services can be accessed at the same time at one interface, the requirement of accessing a plurality of services at the same time by the television is met, and meanwhile, the downlink interfaces of the home gateway are bound based on service identification, so that the security of the interfaces is ensured.

## Description

### Field of the Invention

The present invention relates to the field of communication technologies, and particularly relates to a home gateway service identification method, device and system.

### Background of the Invention

Services provided by a home gateway comprise Internet services, IPTV services, voice services and device management services. Devices using the services are usually single-purpose devices, for example, the IPTV services correspond to a set-top box, the voice service correspond to a telephone, and the Internet services correspond to a computer, a mobile phone, a television and the like. The interfaces connected to the home gateway are isolated, which results in services accessible by the interfaces being fixed. For example, a computer, a mobile phone and a television can access the Internet services but cannot access the IPTV services. An IPTV interface of the home gateway provides an IPTV service channel for an IPTV set-top box but is isolated from an Internet service channel and cannot access the Internet services. With the development of optical access technologies, a plurality of service offerings have been brought to households, industrial parks, hotels, high-speed railways, airports and other industries, and a scale of users and types of services have gradually increased. Due to the widespread application of IPTV services, terminals carrying IPTV services are diversified, for example, a television carries the IPTV services and simultaneously needs to use both the Internet services and the IPTV services. However, traditional interface binding allows access to only one type of service and cannot access both types. Although the terminal connected in full-routing mode of the home gateway can access two or more types of services, all interfaces of the home gateway can access the services, this is not conducive to management of IPTV services and users by an operator and lacks security.

At present, the home gateway needs to identify the services required to be accessed by the devices from different downlink interfaces. Services that may be accessed by the devices of the downlink interfaces comprise IPTV, Internet, voice and gateway management, either one or more of them. Currently, the most common case in which the devices of the downlink interfaces access a plurality of services is that the IPTV services and Internet services are accessed simultaneously. Presently, the most conventional approach to satisfying such a demand is to set the home gateway to a full-routing mode. The full-routing mode refers to forwarding data packets of downlink devices to different services according to a routing table of the home gateway. In such a case, all the data packets of the downlink devices access different services according to the routing table of the home gateway, that is, all the downlink devices of the home gateway can access the IPTV services. This does not meet the operator's requirement for controlling services. In addition, access by the current downlink devices of the home gateway to the IPTV services is usually implemented by interface binding, that is, one or two specific interfaces are designated to access only the IPTV services. The devices connected to the bound interfaces can only access the IPTV services and cannot access the Internet services. When a television carries IPTV services and simultaneously needs to use both Internet services and IPTV services, a user has to manually plug and unplug network cables to switch interfaces according to the services to be accessed.

Therefore, how to access a plurality of services simultaneously while ensuring security of the interfaces is a technical problem that urgently needs to be solved.

### Summary of the Invention

The purpose of the present application provides a home gateway service identification method, device and system, which can access two or more services at the same time at one interface, which meets the requirement of accessing a plurality of services at the same time by the television, and meanwhile, binds the downlink interfaces of the home gateway based on service identification so as to ensure the security of the interface.

In a first aspect, the present application provides a home gateway service identification method, comprising:
judging an access destination address of a terminal connected with the home gateway by a home gateway so as to identify the type of a service initiated by the terminal;
if it is identified that the service initiated by the terminal belongs to IPTV services, routing the service to an IPTV network by the home gateway; and
if it is identified that the service initiated by the terminal belongs to Internet services, forwarding the service to an Internet by the home gateway, and binding all remaining interfaces except the interfaces used by the terminal carrying the IPTV services with a public network.

In combination with the first aspect, as an optional implementation, the access destination address of a data packet from the terminal connected with the home gateway is acquired; and
the home gateway identifies a service type accessed by the terminal connected with the home gateway according to routing table information and the access destination address of the data packet, and the service type comprises: the IPTV services, the Internet services and gateway management services.

In combination with the first aspect, as an optional implementation, based on a first wide area network connection and a second wide area network connection established on the home gateway, VLAN information is respectively set for the first wide area network connection and the second wide area network connection, and a first identifier is set for a VLAN_ID of the first wide area network connection; a second identifier is set for a VLAN_ID of the second wide area network connection; and
based on the set identifiers, the VLAN information of an outgoing data packet after routing-table forwarding is analyzed and compared through VLANs of services under WAN connections so as to acquire the service type accessed by the outgoing data packet.

In combination with the first aspect, as an optional implementation, data packets from downlink connection interfaces of the home gateway are tagged with different labels so as to identify interface information from which the data packets originate, and the interface information is an interface number of the home gateway.

In combination with the first aspect, as an optional implementation, the interface number of the data packet and the VLAN information of the outgoing data packet are acquired;
if a plurality of values are identified in the VLAN information of the outgoing data packet, it is determined that a device connected to the interface number of the home gateway needs to access different types of services; and
if only one value is identified in the VLAN information of the outgoing data packet, it is determined that the device connected to the interface number of the home gateway accesses only one type of service.

In combination with the first aspect, as an optional implementation, an operating mode of the home gateway is set to a full-routing mode and a routing table is configured;
the home gateway is configured to initiate an IPoE connection to acquire IPs, which comprises an IPTV IP, a private network IP, and a public network IP, which interact with an IPTV service platform, a gateway management platform, and an Internet service platform, respectively; and
the step of configuring the routing table comprises: receiving configuration information of the routing table issued by the gateway management platform, and receiving the configuration information issued by the gateway management platform for binding different interfaces with different WAN connections.

In combination with the first aspect, as an optional implementation, the number of entry interfaces corresponding to each outgoing service of the home gateway is managed based on a service management quantity issued by a user management platform, and the service management quantity is the number of devices connected under the home gateway accessing the services.

In combination with the first aspect, as an optional implementation, IP addresses of the Internet, the IPTV and a gateway management are acquired through utilizing the home gateway, so as to enable data interaction between the terminal and an IPTV service platform, an Internet platform and a gateway management platform.

In combination with the first aspect, as an optional implementation, when a device accessing one or more interfaces of the home gateway are identified as accessing a plurality of service types, a MAC address of the device corresponding to the interfaces is acquired and the MAC address is set as the MAC address allowed to access the plurality of service types, and the remaining MAC addresses are set as the MAC addresses allowed to access only a single service type.

In a second aspect, the present application provides a home gateway service identification device, comprising:
an identification module, which is configured to utilize a home gateway to judge an access destination address of a terminal connected with the home gateway so as to identify the type of a service initiated by the terminal; and
a processing module, which is configured to route the service to an IPTV network by the home gateway if it is identified that the service initiated by the terminal belongs to IPTV services; and
configured to forward the service to an Internet by the home gateway if it is identified that the service initiated by the terminal belongs to Internet services, and to bind all remaining interfaces except the interfaces used by the terminal carrying the IPTV services with a public network.

In a third aspect, the present application provides a home gateway service identification system, comprising:
an access module, which is configured to initiate an IPoE connection to acquire a plurality of IPs, comprising an IPTV IP, a TR069 IP and a public network IP, which interact with an IPTV service platform, a gateway management platform and an Internet service platform, respectively; and
a management module, which is configured to receive configuration information of a routing table issued by the gateway management platform, to receive configuration information issued by the gateway management platform for binding different interfaces with different WAN connections, and to select a corresponding WAN connection during data forwarding;
a transmission module, which is configured to bind all interfaces except the interfaces used by a terminal carrying the IPTV services with a public-network WAN connection, and to transmit data of an IPTV software terminal through a private-network WAN connection and to transmit data of other Internet applications through the public-network WAN connection according to the routing table configured by the management module; and
a security module, which is configured to set a MAC filtering rule for the private-network WAN connection based on a MAC of the terminal carrying the IPTV services so as to allow access only by the terminal carrying the IPTV services.

The present invention provides a home gateway service identification method, device and system, and the method comprises the steps: judging an access destination address of a terminal connected with the home gateway by a home gateway so as to identify the type of a service initiated by the terminal; if it is identified that the service initiated by the terminal belongs to IPTV services, routing the service to an IPTV network by the home gateway; and if it is identified that the service initiated by the terminal belongs to Internet services, forwarding the service to an Internet by the home gateway, and binding all remaining interfaces except the interfaces used by the terminal carrying the IPTV services with a public network. According to the present application, two or more services can be accessed at the same time at one interface, the requirement of accessing a plurality of services at the same time by the television is met, and meanwhile, the downlink interfaces of the home gateway are bound based on service identification, so that the security of the interfaces is ensured.

It should be understood that the above general description and the following detailed description are merely exemplary and do not limit the present invention.

### Brief Description of the Drawings

The accompanying drawings are incorporated into the specification and form a part of this specification, illustrating embodiments of the present invention and being used together with the specification to explain the principles of the present invention.
Fig. 1 is a flowchart of a home gateway service identification method in the embodiment of the present application;
Fig. 2 is a schematic diagram of a home gateway service identification device in the embodiment of the present application;
Fig. 3 is a schematic diagram of service identification in the embodiment of the present application;
Fig. 4 is a schematic diagram of a home gateway service identification system in the embodiment of the present application;
Fig. 5 is a schematic diagram of in-home networking in the embodiment of the present application.

### Detailed Description of the Embodiments

The exemplary embodiments will be described in detail herein, with examples shown in the accompanying drawings. In the following description of the drawings, unless otherwise indicated, the same reference numerals in different drawings denote the same or similar elements. The embodiments described in the following exemplary embodiments do not represent all embodiments consistent with the present invention. Rather, they are merely embodiments of devices and methods consistent with certain aspects of the present invention as detailed in the appended claims.

In addition, the drawings are illustrative only and are not necessarily drawn to scale. Some block diagrams shown in the drawings represent functional entities and do not necessarily correspond to physically or logically separate entities.

The present application will be further described below in detail with reference to the drawings in combination with the embodiments.

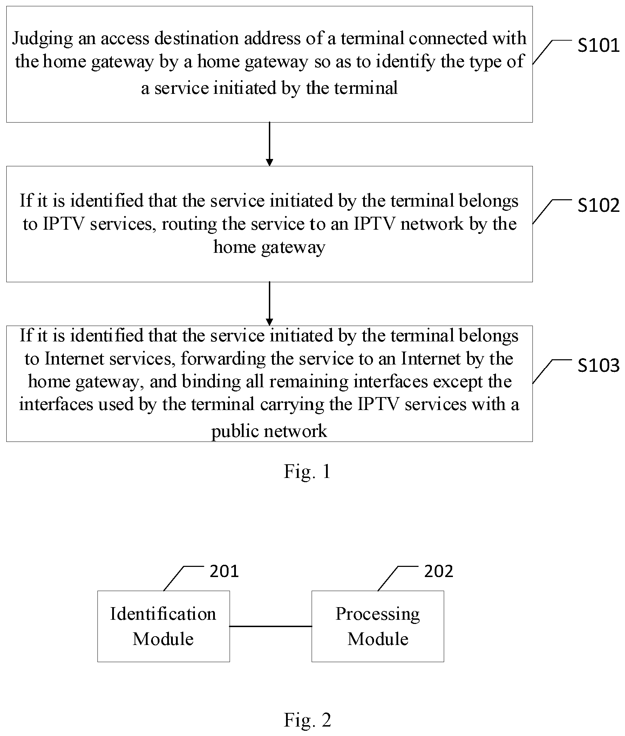

Referring to Fig. 1, Fig. 1 is a flowchart of a service binding method provided by the present invention. As shown in Fig. 1, the method comprises the following steps:
S101. A home gateway judges an access destination address of a terminal connected with the home gateway so as to identify the type of a service initiated by the terminal.

Specifically, before identifying the type of the service initiated by the terminal, an operating mode of the home gateway is set to a full-routing mode, and a routing table is configured.

The home gateway is configured to initiate an IPoE connection to acquire IPs, which comprises an IPTV IP, a private network IP, and a public network IP, which interact with an IPTV service platform, a gateway management platform, and an Internet service platform, respectively; and
the step of configuring the routing table comprises: receiving configuration information of the routing table issued by the gateway management platform, and receiving the configuration information issued by the gateway management platform for binding different interfaces with different WAN connections.

The specific implementation is as follows: the home gateway supports initiating an IPoE connection. The home gateway supports acquiring three IPs, comprising an IPTV IP, a TR069 IP, and a public network IP, which interact with an IPTV service platform, a gateway management platform, and an Internet service platform, respectively.

The home gateway operates in full-routing mode through configuration by the gateway management platform. The specific implementation is as follows: the home gateway supports receiving configuration information of the routing table issued by the gateway management platform. The home gateway supports receiving configuration information issued by the gateway management platform for binding different interfaces with different WAN connections.

All interfaces, except the interface used by the terminal carrying IPTV software terminal, are bound to the public-network WAN connection. According to the routing table configured by the management function, data of the IPTV software terminal is transmitted through a private-network WAN connection, and data of other Internet applications is transmitted through a public-network WAN connection.

Before the identification, the method further comprises: the number of entry interfaces corresponding to each outgoing service of the home gateway are managed based on a service management quantity issued by a user management platform, and the service management quantity is the number of devices connected under the home gateway accessing the services.

Specifically, based on the service management quantity issued by the user management platform, the number of entry interfaces corresponding to each outgoing service is managed. For example, if the issued IPTV service management quantity is 2, the number of managed entry interfaces that can access IPTV services is 2.

In one embodiment, the gateway management platform is configured for remote management and is responsible for sending a service management quantity and an operating mode type to a user's home gateway. The operating mode type refers to the mode of the home gateway, which currently comprises interface binding and full-routing modes. In the present invention, the purpose is to notify the home gateway to operate in full-routing mode. The quantity refers to the number of devices connected under the home gateway that can access a certain service. For example, the number of devices under the home gateway that can access IPTV services is 2. By default, the IPTV service quantity is 1, and the Internet service quantity is the maximum number of devices that can be connected. In the present invention, the type sent to the home gateway refers to the routing mode, the routing table corresponding to this mode, and the username and password of the IPTV. After obtaining the username and password of the IPTV, the home gateway acquires an IPTV IP address through its networking function through the IPoE connection.

Subsequently, an access destination address of a data packet from the terminal connected to the home gateway is obtained;
the home gateway identifies the service type accessed by the terminal connected with the home gateway according to routing table information and the access destination address of the data packet, and the service type comprises: IPTV services, Internet services and gateway management services.

Specifically, to identify the type of service initiated by the terminal, the method specifically comprises: based on a first wide area network connection and a second wide area network connection established on the home gateway, VLAN information is respectively set for the first wide area network connection and the second wide area network connection, and a first identifier is set for a VLAN_ID of the first wide area network connection; a second identifier is set for a VLAN_ID of the second wide area network connection; and based on the set identifiers, the VLAN information of an outgoing data packet after routing-table forwarding is analyzed and compared through VLANs of services under WAN connections so as to acquire the service type accessed by the outgoing data packet.

For example, two WAN connections (WAN_Other and WAN_INTERNET) are established on the home gateway, and VLAN information is respectively set for each WAN connection: the VLAN_ID of WAN_Other is set to VLAN_ID1, and the VLAN_ID of WAN_INTERNET is set to VLAN_ID2. WAN_Other acquires the private network IP through IPoE or PPPoE routing mode and uses the private network IP to interact with the IPTV service platform, while WAN_INTERNET acquires the public network IP through routing mode and uses the public network IP to interact with the public network service platform. The VLAN information of an outgoing data packet after routing-table forwarding is analyzed and compared through VLANs of services under WAN connections to determine the service type at the egress interface. For example, the VLAN of IPTV is VLAN_ID1, and the VLAN of Internet services is VLAN_ID2. If the service is the IPTV services, communication is performed with the IPTV using the acquired IPTV IP address.

In one embodiment, data packets from downlink connection interfaces of the home gateway are tagged with different labels so as to identify interface information from which the data packets originate, and the interface information is the interface number of the home gateway.

For ease of understanding, an example is provided: the data packets from each downlink interface of the home gateway are tagged to indicate the interface information from which the data packets originate. For example, the data packets from the first interface are tagged as "a", and the data packets from the second interface are tagged as "b". It should be explained that the purpose of tagging the packets herein is to identify the specific interface of each packet during the subsequent identification process. In the above, the type of each packet has already been identified, but the interface through which the packet was received is still unknown. Therefore, it is necessary to determine which interface the packet comes from and which services it needs to access.

Based on the data packet tags and service types, the type of service that a device connected to the interface of the home gateway needs to access is determined. The service type comprises IPTV services, Internet services and gateway management services. Specifically, the interface number of the data packet and the VLAN information of the outgoing data packet are acquired; if a plurality of values are identified in the VLAN information of the outgoing data packet, it is determined that a device connected to the interface number of the home gateway needs to access different types of services; and if only one value is identified in the VLAN information of the outgoing data packet, it is determined that the device connected to the interface number of the home gateway accesses only one type of service.

For example, the interface information from which a data packet originates (the number of downlink interfaces varies in different types of home gateways, ranging from 1 to 16, and the interface refers to the interface of the home gateway) and the service type of the outgoing data packet are analyzed to determine the types of services accessed by the device connected to the interface. For example, the data packet tagged as "a" may have an outgoing date VLAN value of 85 at one time and 100 at another time. The data packet tagged as "b", however, has an outgoing VLAN value of only 100 (For instance, the VLAN value of the IPTV is 85, and the VLAN value of the public network is 100. When data packet A from interface "a" is tagged with VLAN 85 at the egress, the packet is sent to the IPTV. Similarly, when data packet B from interface "a" is tagged with VLAN 100 at the egress interface, the packet is sent to the public network. In other words, for the same interface "a," data packet A has VLAN 85, and data packet B has VLAN 100-sometimes 85, sometimes 100). This indicates that the device connected to the first interface of the home gateway needs to access both IPTV and Internet services, while the device connected to the second interface of the home gateway only needs to access the Internet services. It can be understood that, at this step, the specific services that the data packets of each interface need to access can be accurately identified.

S102. If it is identified that the service initiated by the terminal belongs to IPTV services, the home gateway routes the service to an IPTV network.

It can be understood that if the service initiated by the terminal is identified as the IPTV services, the home gateway transmits the data of the IPTV services through the private network WAN connection according to the routing table, while the data of other services is transmitted through the public network WAN connection. In other words, once the service type is known, the data is routed to its destination address according to the routing table.

S103. If it is identified that the service initiated by the terminal belongs to Internet services, forwarding the service to an Internet by the home gateway, and binding all remaining interfaces except the interfaces used by the terminal carrying the IPTV services with a public network.

It can be understood that if the service initiated by the terminal is identified as the Internet services, the home gateway transmits the data of the service through the public network WAN connection according to the routing table.

It can be understood that, based on the judgment of the access destination address of the terminal connected to the home gateway and the routing table configuration provided by the platform, if the service initiated by the terminal is identified as the IPTV service, the home gateway routes the service to the IPTV network, whereas the service for the Internet services from the user terminal is forwarded by the home gateway to the Internet. All interfaces, except the interface used by the terminal carrying the IPTV soft terminal, are bound to the public-network WAN connection.

For example, the home gateway analyzes the packets from each downlink interface to determine the service being accessed. At this stage, all the interfaces can access both service A and service B. Once the gateway identifies that a specific interface must access both A and B simultaneously, the gateway binds all remaining interfaces so that they can access only the Internet. Consequently, those other interfaces can access only service B, while the identified interface retains access to both A and B.

For example, in the traditional full-routing mode, all the interfaces of the home gateway can access both IPTV and the Internet. If the home gateway has four interfaces, then any television connected to these four interfaces can access IPTV. Since the operator charges based on the number of IPTV terminals, this mode allows all four interfaces to access IPTV. As a result, a user who originally subscribed to only one IPTV service could effectively use four terminals to access it. This results in revenue loss for the operator.

In addition, allowing IPTV access on all the four interfaces also introduces security risks to the IPTV platform. For example, if a computer infected with a virus is connected to one of the interfaces, the virus could spread into the IPTV network.

The solution proposed in the present application is as follows:

### Embodiment 1:

Step 1. The management platform issues a management requirement to the home gateway equipped with four connection interfaces, specifying that the home gateway allows only one terminal to access IPTV and that the home gateway shall operate in full-routing mode.

Step 2. The home gateway receives the instruction from the gateway management platform and configures itself to operate in full-routing mode (The previous mode is removed. In most previous configurations, interface 2 was bound to IPTV services, while interfaces 1, 3, and 4 were bound to Internet services. Terminals connected to different interfaces could access only the corresponding service).

Step 3. The home gateway starts acquiring the data packets from the downlink interfaces and identifies the destination of each packet.

For example, a user connects a television equipped with an IPTV software terminal to interface 3. interface 1 is connected to a computer or other devices.

The home gateway identifies the packets coming from each interface and determines the destination of those packets. Once the home gateway detects that packets from interface 3 access both the Internet and IPTV services, interfaces 1, 2, and 4 are immediately bound to the Internet services.

As a result, interfaces 1, 2, and 4 can access only the Internet services, while interface 3 operates in routing mode. In this state, only interface 3 can access both the Internet services and IPTV services.

### Embodiment 2:

Based on the Embodiment 1, the operator activates two IPTV services for the customer. In this case, during the Step 3 above, after identifying that interface 3 accesses both the IPTV and the Internet services, the identification process continues, waiting for the next interface to access both the IPTV and the Internet services. At this time, the user connects another television equipped with an IPTV soft terminal to interface 4. After the home gateway identifies that packets from interface 4 also access both the IPTV and the Internet services, it binds interfaces 1 and 2 to the Internet services.

As a result, interfaces 3 and 4 can access both the Internet and IPTV services, while interfaces 1 and 2 can access only the Internet services.

### Embodiment 3:

Based on the Embodiment 1, if the user moves the original interface 3 connection to a computer and moves interface 2 to a television, the home gateway identifies that interface 2 needs to access both the Internet and IPTV services. Since the operator has activated only one IPTV service, the home gateway binds interfaces 1, 3, and 4 to the Internet services.

As a result, only interface 2 can access both IPTV and the Internet services, while the other interfaces can access only the Internet services.

### Embodiment 4:

Based on the Embodiment 1, the MAC address of the device connected to interface 3 is obtained, which is the MAC address of the television with the soft terminal. This MAC address is designated as allowed to access both the Internet and IPTV services, while all other MAC addresses can access only the Internet service.

As a result, the television can access both IPTV and the Internet services regardless of which interface it is connected to. However, other televisions cannot access the IPTV service. Even if another television is connected to interface 3, it still cannot access the IPTV service.

In one embodiment, the home gateway obtains the IP addresses of the Internet, the IPTV, and the gateway management, respectively, so as to enable data exchange between the terminal and the IPTV service platform, the Internet platform, and the gateway management platform. It can be understood that, for example, when the terminal television accesses the IPTV service, the data packets are sent to the home gateway. The home gateway identifies that the packets are destined for IPTV according to the routing table according to the routing table and forwards them to the IPTV platform for communication through the obtained IP address. It should be noted that the terminal cannot directly obtain the IPTV IP address, so the home gateway is used to enable communication between the terminal and the IPTV platform. The same applies to other services such as the Internet platform and the gateway management platform.

Optionally, when it is identified that a device connected to one or more interfaces of the home gateway accesses two or more types of services, the MAC address of the device at the interface is obtained and set as the MAC address allowed to access a plurality of service types, while the remaining MAC addresses are set to access only a single service type. That is, it is assumed that device D accesses both services A and B, the MAC address of device D can be directly obtained. All other MAC addresses are set to access only A or B. In this way, only one MAC address can access both A and B, and if any MAC address other than this one attempts to access both A and B, it is directly denied.

In summary, in the present application, the home gateway identifies the type of service accessed by the data packets forwarded according to the routing table, and tags the data packets from each downlink interface of the home gateway. Based on the data packet tags and service types, the type of service that devices connected to the home gateway need to access is determined. A service management quantity is added in the user management platform, and the user management platform sends the service management quantity and type to the user's home gateway (the purpose is to accommodate a small number of users, where a single household requires IPTV services for two television soft terminals. Therefore, the operator needs to manage the number of terminals that one user can connect). The home gateway controls the interface binding type through using the management information from the user management platform together with the method of identifying data packet source tags and outgoing service types, ultimately achieving the service management requirements of the operator.

Referring to Fig. 2, Fig. 2 shows a schematic diagram of a service binding device provided by the present invention. As shown in Fig. 2, the device comprises:
an identification module 201, which is configured to utilize a home gateway to judge an access destination address of a terminal connected with the home gateway so as to identify the type of a service initiated by the terminal;
a processing module 202, which is configured to route the service to an IPTV network by the home gateway if it is identified that the service initiated by the terminal belongs to IPTV services; and
configured to forward the service to an Internet by the home gateway if it is identified that the service initiated by the terminal belongs to Internet services, and to bind all remaining interfaces except the interfaces used by the terminal carrying the IPTV services with a public network.

Further, in one possible embodiment, the identification module is also configured to acquire the access destination address of a data packet from the terminal connected with the home gateway; and
the home gateway identifies a service type accessed by the terminal connected with the home gateway according to routing table information and the access destination address of the data packet, and the service type comprises: IPTV services, Internet services and gateway management services.

Further, in one possible embodiment, the processing module is also configured to, based on a first wide area network connection and a second wide area network connection established on the home gateway, respectively set VLAN information for the first wide area network connection and the second wide area network connection, and set a first identifier for a VLAN_ID of the first wide area network connection; the processing module is also configured to set a second identifier for a VLAN_ID of the second wide area network connection; and
based on the set identifiers, the VLAN information of an outgoing data packet after routing-table forwarding is analyzed and compared through VLANs of services under WAN connections so as to acquire the service type accessed by the outgoing data packet.

Further, in one possible embodiment, the processing module is also configured to tag data packets from downlink connection interfaces of the home gateway with different labels so as to identify interface information from which the data packets originate, and the interface information is the interface number of the home gateway.

Further, in one possible embodiment, the processing module is also configured to acquire the interface number of the data packet and the VLAN information of the outgoing data packet;
if a plurality of values are identified in the VLAN information of the outgoing data packet, it is determined that a device connected to the interface number of the home gateway needs to access different types of services; and
if only one value is identified in the VLAN information of the outgoing data packet, it is determined that the device connected to the interface number of the home gateway accesses only one type of service.

Further, in one possible embodiment, the processing module is also configured to set the operating mode of the home gateway to a full-routing mode and configure a routing table;
the home gateway is configured to initiate an IPoE connection to acquire IPs, which comprises an IPTV IP, a private network IP, and a public network IP, which interact with an IPTV service platform, a gateway management platform, and an Internet service platform, respectively; and
the step of configuring the routing table comprises: receiving configuration information of the routing table issued by the gateway management platform, and receiving the configuration information issued by the gateway management platform for binding different interfaces with different WAN connections.

Further, in one possible embodiment, the processing module is also configured to manage the number of entry interfaces corresponding to each outgoing service of the home gateway based on a service management quantity issued by the user management platform, and the service management quantity is the number of devices connected under the home gateway accessing the services.

Further, in one possible embodiment, the identification module is also configured to utilize the home gateway to obtain the IP addresses of the Internet, the IPTV, and the gateway management, respectively, so as to enable data exchange between the terminal and the IPTV service platform, the Internet platform, and the gateway management platform.

Further, in one possible embodiment, the processing module is also configured to acquire a MAC address of the device corresponding to the interfaces when a device accessing one or more interfaces of the home gateway are identified to access a plurality of service types and set the MAC address as the MAC address allowed to access the plurality of service types, and set the remaining MAC addresses as the MAC addresses allowed to access only a single service type.

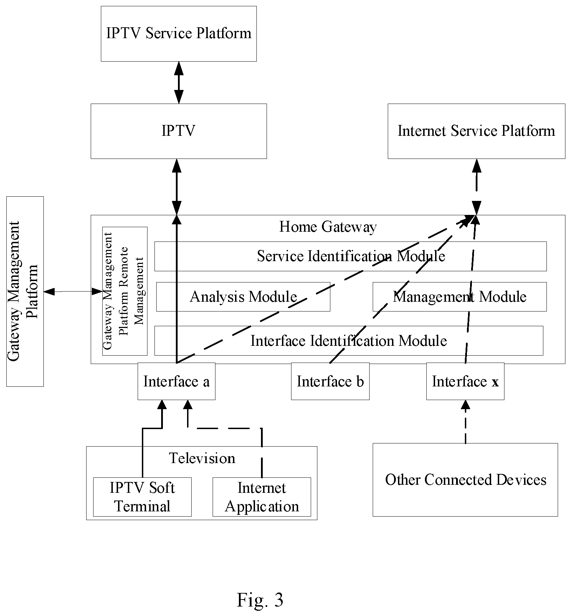

Referring to Fig. 3, Fig. 3 shows a schematic diagram of service identification provided by the present invention. As shown in Fig. 3,
the gateway management platform is configured for remote management and is responsible for sending a service management quantity and type to a user's home gateway. The quantity refers to the number of devices connected under the home gateway that can access a certain service. For example, the number of devices under the home gateway that can access IPTV services is 2. By default, the IPTV service quantity is 1, and the Internet service quantity is the maximum number of devices that can be connected. In the present invention, the type sent to the home gateway refers to the routing mode, the routing table corresponding to this mode, and the username and password of the IPTV. After obtaining the username and password of the IPTV, the home gateway acquires an IPTV IP address through its networking function through the IPoE connection.

The service identification module in the home gateway is configured to analyze the service type of the outgoing data packet. The VLAN information of the outgoing data packet after routing-table forwarding is analyzed and compared through VLANs of services under WAN connections to determine the service type of the outgoing packet. For example, the VLAN of IPTV services is VLAN_ID1, and the VLAN of Internet services is VLAN_ID2. If the service is the IPTV service, communication is performed with the IPTV using the acquired IPTV IP address.

The interface identification module in the home gateway is configured to tag the data packets from each downlink interface of the home gateway to indicate the interface information from which the data packets originate. For example, the data packets from the first interface are tagged as "a", and the data packets from the second interface are tagged as "b".

The analysis module is configured to analyze the interface information from which the data packet originates and the service type of the outgoing data, so as to determine the service type accessed by the device connected to the interface. For example, the data packet tagged as "a" may have an outgoing data VLAN value of 85 at one time and 100 at another time. The data packet tagged as "b" has an outgoing data VLAN value of only 100. This indicates that the device connected to the first interface of the home gateway needs to access both the IPTV and Internet services, while the device connected to the second interface of the home gateway only needs to access the Internet service.

The management module is configured to manage the number of entry interfaces corresponding to each outgoing service based on the service management quantity issued by the user management platform. For example, if the issued IPTV service management quantity is 2, the number of managed entry interfaces that can access IPTV services is 2. The method is as follows: after the analysis module indicates that two interfaces simultaneously access the IPTV service, the management module binds the remaining interfaces to access only the Internet service. For example, for a device with four interfaces, if the analysis module indicates that the first and third interfaces access the IPTV service, the second and fourth interfaces are bound to access only the Internet service. (If the user switches from the third interface to the fourth interface, the two interfaces simultaneously accessing the IPTV services become the first and fourth interfaces. In this case, the second and third interfaces are bound to access only the Internet services.)

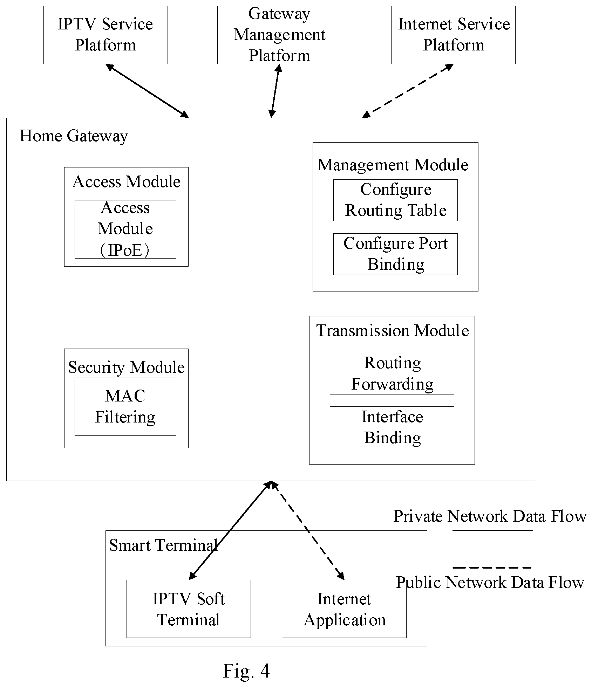

Referring to Fig. 4, Fig. 4 illustrates a network access system architecture for intelligent IPTV services provided by the present invention. As shown in Fig. 4,
the user terminal (television) has the demand to access both IPTV services and Internet services. The home gateway cooperates with the IPTV soft terminal to support dual-network access (simultaneous access to IPTV services and Internet services) and intelligent service access functionality. The home gateway is configured to obtain separate addresses for the Internet and the IPTV network. Based on the judgment of the access destination address of the terminal (television) and the routing table configuration provided by the platform, the home gateway distinguishes whether the service initiated by the terminal (television) is an IPTV service, in which case the service is routed to the IPTV network, whereas for the service from the terminal for Internet service, the home gateway forwards the service to the public Internet.

The access module is configured to initiate an IPoE connection to acquire a plurality of IPs, comprising an IPTV IP, a TR069 IP and a public network IP, which interact with an IPTV service platform, a gateway management platform and an Internet service platform, respectively.

The management module is configured to receive configuration information of the routing table issued by a gateway management platform, to receive configuration information issued by the gateway management platform for binding different interfaces with different WAN connections, and to select a corresponding WAN connection during data forwarding.

The transmission module is configured to bind all interfaces except the interfaces used by a terminal carrying IPTV services with a public-network WAN connection, and to transmit data of an IPTV software terminal through a private-network WAN connection and to transmit data of other Internet applications through the public-network WAN connection according to the routing table configured by the management module.

The security module is configured to set a MAC filtering rule for the private-network WAN connection based on the MAC of the terminal carrying the IPTV services (that is, when it is identified that a device connected to one or more interfaces of the home gateway accesses a plurality of service types, the MAC address of the device on the interface is obtained and set as the MAC address allowed to access the plurality of service types, while the remaining MAC addresses are set as the MAC addresses allowed to access only a single service type), so as to allow access only by the terminal carrying the IPTV services.

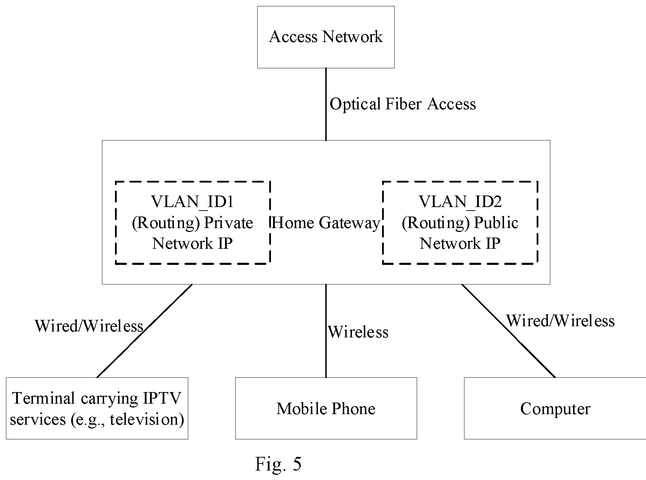

Referring to Fig. 5, Fig. 5 illustrates a schematic diagram of in-home networking provided by the present invention. As shown in Fig. 5,
the home gateway accesses the IP network through an optical fiber or a network cable and communicates with the IPTV and the Internet. Televisions or other terminals with IPTV soft terminals installed can access the home gateway through any interface, while other terminals such as mobile phones and computers can access the home gateway through wired or wireless connections. (The original scheme allows the IPTV services to be accessed only through designated interfaces, and the designated interfaces can access only the IPTV services, without Internet access.)

In the industry: the home gateway has the capability to provide different types of services and supports a plurality of WAN connections. WAN_Other is the WAN connection for accessing IPTV, while WAN_INTERNET is the WAN connection for accessing the Internet.

To ensure network security: WAN_Other allows access only from specified interfaces (such as LAN1/SSID1), (all other interfaces are bound to WAN_INTERNET.) WAN_INTERNET can be accessed by all the interfaces. The data from the LAN1 interface is forwarded through routing. Based on the routing configuration table issued by the gateway management platform, IP data with destination addresses in the routing table is routed to WAN_Other, while the remaining data are routed to WAN_INTERNET.

The WAN_Other is configured with a security policy to allow only designated interfaces (such as LAN1/SSID1) to be accessed by terminals carrying IPTV soft terminals. This can be implemented through filtering the MAC addresses of the terminals carrying the IPTV soft terminals.

The above-mentioned are only the embodiments of the present application, so that those skilled in the art can understand or implement the present application. For those skilled in the art, various modifications to these embodiments will be obvious, and the general principles defined herein can be implemented in other embodiments without departing from the spirit or scope of the present application. Therefore, the present application will not be limited to the embodiments shown in this document, but will be subject to the widest scope consistent with the principles and novel features applied herein.

## Claims

1. A home gateway service identification method, comprising:
judging an access destination address of a terminal connected with the home gateway by a home gateway so as to identify the type of a service initiated by the terminal;
if it is identified that the service initiated by the terminal belongs to IPTV services, routing the service to an IPTV network by the home gateway; and
if it is identified that the service initiated by the terminal belongs to Internet services, forwarding the service to an Internet by the home gateway, and binding all remaining interfaces except the interfaces used by the terminal carrying the IPTV services with a public network.

2. The method according to claim 1, wherein the step of judging an access destination address of a terminal connected with the home gateway by a home gateway so as to identify the type of a service initiated by the terminal comprises:
acquiring an access destination address of a data packet from the terminal connected with the home gateway; and
identifying a service type accessed by the terminal connected with the home gateway by the home gateway according to routing table information and the access destination address of the data packet, wherein the service type comprises: the IPTV services, the Internet services and gateway management services.

3. The method according to claim 2, wherein the step of identifying a service type accessed by the terminal connected with the home gateway comprises:
based on a first wide area network connection and a second wide area network connection established on the home gateway, respectively setting VLAN information for the first wide area network connection and the second wide area network connection, and setting a first identifier for a VLAN_ID of the first wide area network connection; setting a second identifier for a VLAN_ID of the second wide area network connection; and
based on the set identifiers, analyzing and comparing the VLAN information of an outgoing data packet after routing-table forwarding through VLANs of services under WAN connections so as to acquire the service type accessed by the outgoing data packet.

4. The method according to claim 3, wherein the method further comprising:
tagging data packets from downlink connection interfaces of the home gateway with different labels so as to identify interface information from which the data packets originate, wherein the interface information is an interface number of the home gateway.

5. The method according to claim 4, wherein the method further comprising:
acquiring the interface number of the data packet and the VLAN information of the outgoing data packet;
if a plurality of values are identified in the VLAN information of the outgoing data packet, determining that a device connected to the interface number of the home gateway needs to access different types of services; and
if only one value is identified in the VLAN information of the outgoing data packet, determining that the device connected to the interface number of the home gateway accesses only one type of service.

6. The method according to claim 1, wherein before the step of judge an access destination address of a terminal connected with the home gateway by a home gateway so as to identify the type of a service initiated by the terminal, the method further comprising:
setting an operating mode of the home gateway to a full-routing mode and configuring a routing table; wherein
the home gateway is configured to initiate an IPoE connection to acquire IPs, comprising an IPTV IP, a private network IP, and a public network IP, which interact with an IPTV service platform, a gateway management platform, and an Internet service platform, respectively; and
the step of configuring the routing table comprises: receiving configuration information of the routing table issued by the gateway management platform, and receiving the configuration information issued by the gateway management platform for binding different interfaces with different WAN connections.

7. The method according to claim 6, wherein the method further comprising:
managing the number of entry interfaces corresponding to each outgoing service of the home gateway based on a service management quantity issued by a user management platform, wherein the service management quantity represents the number of devices connected under the home gateway accessing the services.

8. The method according to claim 1, wherein the method further comprising:
acquiring IP addresses of the Internet, the IPTV and a gateway management through utilizing the home gateway, so as to enable data interaction between the terminal and an IPTV service platform, an Internet platform and a gateway management platform.

9. The method according to claim 1, wherein the method further comprising:
when a device accessing one or more interfaces of the home gateway are identified as accessing a plurality of service types, acquiring a MAC address of the device corresponding to the interfaces and setting the MAC address as the MAC address allowed to access the plurality of service types, and setting the remaining MAC addresses as the MAC addresses allowed to access only a single service type.

10. A home gateway service identification device for implementing the home gateway service identification method according to any one of claims 1-9, comprising:
an identification module, which is configured to utilize a home gateway to judge an access destination address of a terminal connected with the home gateway so as to identify the type of a service initiated by the terminal; and
a processing module, which is configured to route the service to an IPTV network by the home gateway if it is identified that the service initiated by the terminal belongs to IPTV services; and
configured to forward the service to an Internet by the home gateway if it is identified that the service initiated by the terminal belongs to Internet services, and to bind all remaining interfaces except the interfaces used by the terminal carrying the IPTV services with a public network.

11. A home gateway service identification system, comprising:
an access module, which is configured to initiate an IPoE connection to acquire a plurality of IPs, comprising an IPTV IP, a TR069 IP and a public network IP, which interact with an IPTV service platform, a gateway management platform and an Internet service platform, respectively; and
a management module, which is configured to receive configuration information of a routing table issued by the gateway management platform, to receive configuration information issued by the gateway management platform for binding different interfaces with different WAN connections, and to select a corresponding WAN connection during data forwarding;
a transmission module, which is configured to bind all interfaces except the interfaces used by a terminal carrying the IPTV services with a public-network WAN connection, and to transmit data of an IPTV software terminal through a private-network WAN connection and to transmit data of other Internet applications through the public-network WAN connection according to the routing table configured by the management module; and
a security module, which is configured to set a MAC filtering rule for the private-network WAN connection based on a MAC of the terminal carrying the IPTV services so as to allow access only by the terminal carrying the IPTV services.
